# EUROPÄISCHE PATENTSCHRIFT

(11) **EP 1 887 584 B1**
(45) Veröffentlichungstag und Bekanntmachung des Hinweises auf die Patenterteilung: **16.07.2008**
(21) Anmeldenummer: 06291287.8
(22) Anmeldetag: 08.08.2006
(51) Int. Cl.: H01B 12/02

(54) **System mit einem supraleitfähigen Kabel**
System with a superconducting cable
Système ayant un câble superconducteur

(43) Veröffentlichungstag der Anmeldung: 13.02.2008
(73) Patentinhaber: Nexans, 75008 Paris (FR)
(72) Erfinder: Schmidt, Frank, 30855 Langenhagen (DE); Frohne, Christian, 30657 Hannover (DE); Solka, Rainer, 30163 Hannover (DE); Schippl, Klaus, 30659 Hannover (DE); Allals, Arnaud, 22940 Saint-Julien (FR)
(74) Vertreter: Döring, Roger

(56) Entgegenhaltungen:
- EP-A- 1 220 239
- DE-A1- 2 250 657
- JP-A- 2000 101 153
- US-A1- 2005 056 456

## Beschreibung

Die Erfindung bezieht sich auf ein System mit einem supraleitfähigen Kabel gemäß dem Oberbegriff des Patentanspruchs 1.

Ein supraleitfähiges Kabel hat elektrische Leiter aus einem speziellen Material, das bei ausreichend tiefen Temperaturen in den supraleitfähigen Zustand übergeht. Der elektrische Widerstand eines entsprechend aufgebauten Leiters geht dadurch gegen Null. Geeignete Materialien sind beispielsweise YBCO (Yttrium-Barium-Kupfer-Oxid) oder BiSCCO (Wismut-Strontium-Kalzium-Kupfer-Oxid). Ausreichend niedrige Temperaturen für ein derartiges Material liegen beispielsweise zwischen 67 K und 110 K, um den supraleitfähigen Zustand zu erreichen. Geeignete Kühlmittel sind beispielsweise Stickstoff, Helium, Neon und Wasserstoff oder Gemische dieser Stoffe, jeweils in flüssigem Zustand.

Aus der US 2005/0056456 A1 geht ein supraleitfähiges Kabel mit einem zentralen Rohr zur Führung eines Kühlmediums hervor. Um das Rohr herum sind zwei supraleitfähige Leiter, zwei elektrostatische Schirme und ein Dielektrikum angeordnet. Der außen liegende supraleitfähige Leiter ist als Rückleiter von einer als mechanischer Schutz dienenden Schicht umgeben, die für ein Kühlmedium undurchlässig ist. Das Kabel ist in einem aus zwei konzentrischen Rohren, zwischen denen sich eine Isolierung befindet, bestehenden Kryostat angeordnet. Zwischen Kabel und Kryostat befindet sich ein Hohlraum zur Führung eines Kühlmediums.

Das eingangs beschriebene System weist ein supraleitfähiges Kabel auf, bei welchem das Kühlmedium während des Betriebes als Imprägniermittel auch in das Dielektrikum eindringt. Ein solches Kabel wird als Kabel mit kaltem Dielektrikum bezeichnet. Es zeichnet sich dadurch aus, daß sehr hohe Leistungen im Hochspannungsbereich übertragen werden können. Ein solches Kabel besteht aus einem Innenleiter und einem konzentrisch dazu angeordneten Schirm bzw. Außenleiter, die durch ein Dielektrikum (Isolierung) voneinander getrennt und auf Abstand gehalten sind. Die supraleitfähigen Leiter bestehen beispielsweise aus Bändern aus supraleitfähigem Material, wie YBCO oder BiSCCO, die dicht nebeneinander liegend mit langem Schlag um einen Träger herumgewickelt sind. Der Träger kann beim Innenleiter ein Rohr oder Strang oder Seil aus einem elektrisch gut leitenden Metall sein, der im Kurzschlußfall auch zur Führung des elektrischen Stromes dient. Der Träger kann jedoch auch aus einem schlecht oder nicht leitenden Metall hergestellt sein, wenn die Führung eines Kurzschlußstromes in diesem Element nicht notwendig erscheint. Der Schirm des Kabels ist aus einem supraleitfähigen Teil und einem denselben umgebenden, aus elektrisch gut leitendem Metall bestehenden Teil - im folgenden kurz "Leiter" genannt - aufgebaut. Der Leiter dient im Kurzschlußfall wieder zur Führung des Stroms. Für den Schirm dient das Dielektrikum als Träger. Es besteht beispielsweise aus einer Vielzahl von Lagen aus Papier und/oder mit Polypropylen laminiertem Papier. Um das Kabel herum ist zur thermischen Isolierung und zur Vervollständigung des Systems unter Einschluß eines Luftspalts ein Kryostat angeordnet, der zwei ineinander liegende Rohre aus Edelstahl aufweist, zwischen denen eine sogenannte Superisolierung und eine Abstandshalterung angeordnet sind. Im Raum zwischen den beiden Rohren des Kryostats besteht ein Vakuum.

Ein supraleitfähiges Kabel wird bei Betrieb des Systems von Raumtemperatur auf eine Temperatur von beispielsweise 73 K gekühlt. Dabei schrumpft das Kabel um etwa 0,3 %. Ein 600 m langes Kabel schrumpft also um etwa 1,8 m. Der Kryostat hingegen schrumpft wegen seines speziellen Aufbaus während dieser Abkühlung nicht bzw. nur unwesentlich. Beim Abkühlen des Kabels und auch bei seiner Wiedererwärmung nach "Abschaltung" der Kühlung kommt es daher zu einer Relativbewegung zwischen Kryostat und Kabel. Die äußere Schicht des Kabels, der Leiter, besteht aus einem elektrisch gut leitenden Metall, wie z. B. Kupfer oder Aluminium. Beide Materialien haben im Vergleich zum inneren Rohr des Kryostats eine geringere Abriebfestigkeit. Es werden daher während der beschriebenen Relativbewegungen von der Oberfläche des Leiters metallische Partikel abgerieben. Diese können in Bereichen des Kabels bzw. des Systems, die elektrischen Feldern ausgesetzt sind, wie beispielsweise Endverschlüsse, zu erheblichen Störungen führen, bis hin zum elektrischen Durchschlag, welcher eine Zerstörung eines Endverschlusses zur Folge haben könnte. Diese Gefahr ist dann noch erhöht, wenn das innere Rohr des Kryostats quer zu seiner Längsrichtung gewellt ist, da durch die Wellung ein erhöhter Abrieb stattfindet.

Der Erfindung liegt die Aufgabe zugrunde, das eingangs geschilderte System so zu gestalten, daß keine durch Abrieb erzeugten metallischen Partikel in Bereiche des Systems gelangen können, die elektrischen Feldern ausgesetzt sind.

Diese Aufgabe wird gemäß den kennzeichnenden Merkmalen des Patentanspruchs 1 gelöst.

Durch die Gleitschicht ist der aus elektrisch gut leitendem Material bestehende Leiter des Kabels weitestgehend gegen Abrieb geschützt. Es werden also bei einer Relativbewegung von Kabel und Kryostat keine Metallpartikel von demselben abgerieben. Gleichzeitig wird die Bewegung des Kabels beim Verkürzen oder Ausdehnen desselben im Kryostat wegen der verminderten Reibung zwischen beiden Teilen erleichtert.

Mit Vorteil wird als abriebfestes Material für die Gleitschicht Bronze verwendet, und zwar vorzugsweise in Form eines Bandes, das um den Leiter des Kabels mit Lücke herumgewickelt wird.

Ausführungsbeispiele des Erfindungsgegenstandes sind in den Zeichnungen dargestellt.

Es zeigen:
Fig. 1 einen Querschnitt durch ein System nach der Erfindung mit einem supraleitfähigen Kabel mit kaltem Dielektrikum.
Fig. 2 eine gegenüber Fig. 1 abgewandelte Ausführungsform des Systems.

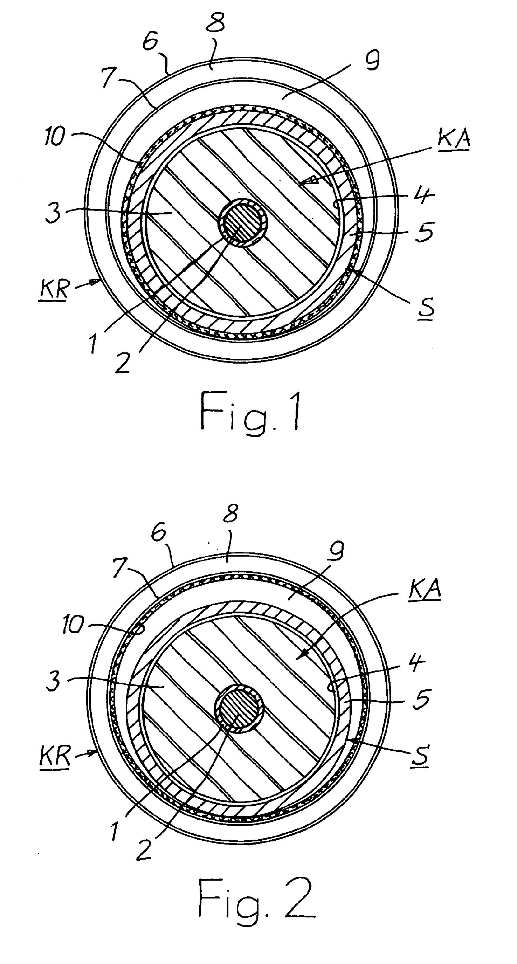

Bei dem in Fig. 1 und 2 dargestellten System ist jeweils ein supraleitfähiges Kabel KA mit kaltem Dielektrikum in einem Kryostat KR angeordnet. Das Kabel KA hat einen Innenleiter 1 aus supraleitfähigem Material, der um einen metallischen Kern 2 aus elektrisch gut leitendem Metall, beispielsweise aus Kupfer, herum angeordnet ist. Der Kern 2 kann ein Strang oder Seil sein. Er kann aber auch als Rohr ausgeführt sein, durch welches beim Betrieb des Systems ein Kühlmittel geleitet werden kann. Der Innenleiter 1 ist von einem Dielektrikum 3 umgeben, das aus einer Vielzahl von Lagen aus Papier und/oder mit Polypropylen laminiertem Papier besteht. Über dem Dielektrikum 3 ist der Schirm S des Kabels KA angeordnet, der aus einem innen liegenden, supraleitfähigen Teil 4 und einem denselben umgebenden, außen liegenden Teil 5 - im folgenden weiter als "Leiter 5" bezeichnet - aus elektrisch gut leitendem Metall aufgebaut ist. Der Leiter 5 besteht vorzugsweise aus Kupfer.

Der Kryostat KR ist aus zwei aus Edelstahl bestehenden Rohren 6 und 7 aufgebaut, die durch einen Zwischenraum 8 voneinander getrennt sind. Sie können mit Vorteil quer zu ihrer Längsrichtung gewellt sein und sind vorzugsweise koaxial zueinander angeordnet. Der Zwischenraum 8 ist evakuiert und mit einer Superisolierung und Abstandshaltern ausgerüstet, welche die beiden Rohre 6 und 7 in ihrer gegenseitigen Lage halten. Die Superisolierung kann in an sich bekannter Weise aus mehreren Lagen einer mit Aluminium bedampften Kunststofffolie bestehen.

Das Kabel KA ist im Kryostat KR angeordnet, und zwar unter Freilassung eines Zwischenraums 9, durch welchen beim Betrieb des Systems ein unter Druck stehendes Kühlmedium geleitet wird, wie beispielsweise Stickstoff. Der Druck des Kühlmediums liegt je nach Randbedingung zwischen 3 bar und 20 bar. In dem in Fig. 1 dargestellten Ausführungsbeispiel ist der Leiter 5 des Kabels KA von einer Gleitschicht 10 aus abriebfestem Material mit einem gegenüber Stahl geringeren Reibungskoeffizienten umgeben, die direkt am Leiter 5 anliegt. Sie ist für das Kühlmedium durchlässig, damit dasselbe als Tränkmittel in das Dielektrikum 3 eindringen kann. Die Dicke der Gleitschicht 10 liegt mit Vorteil bei 0,1 mm bis 0,2 mm.

Geeignete Materialien für die Gleitschicht 10 sind beispielsweise Polytetrafluorethylen und Molydänsulfat. Mit besonderem Vorteil wird für die Gleitschicht 10 jedoch Bronze verwendet. Wenn die Gleitschicht 10 auf das Kabel KA aufgebracht ist, besteht dieselbe mit Vorteil aus einem Band aus Bronze, das um den Leiter 5 mit Lücke herumgewickelt ist.

Die Gleitschicht 10 kann gemäß Fig. 2 auch an der inneren Oberfläche des inneren Rohres 7 des Kryostats KR angebracht sein. Es ist auch möglich, sowohl um das Kabel KA herum als auch im Rohr 7 eine Gleitschicht 10 vorzusehen.

Bewegungen des Kabels KA im Kryostat KR ergeben sich bei Inbetriebnahme des Systems mit entsprechender Abkühlung und bei Abschaltung des Systems bei Störfällen und zur Wartung mit entsprechender Erwärmung. Bei Einsatz der Gleitschicht 10 zwischen Kabel KA und Kryostat KR wurde auch nach einer größeren Anzahl derartigen Zyklen von Abkühlen und Erwärmen kein Abrieb mehr festgestellt.

## Patentansprüche

1. System mit einem supraleitfähigen Kabel, das aus einem supraleitfähigen Innenleiter (1), einem konzentrisch zu demselben angeordneten Schirm (S) und einem zwischen Innenleiter und Schirm angebrachten Dielektrikum (3) besteht, bei welchem der Schirm (S) aus einem supraleitfähigen Teil (4) und einem denselben umgebenden, aus elektrisch gut leitendem Material bestehenden Teil (5) aufgebaut ist, bei welchem der Schirm unter Einschluß eines der Durchleitung eines flüssigen Kühlmediums dienenden Zwischenraums (8) von einem Kryostat (KR) umgeben ist, der aus zwei konzentrisch zueinander verlaufenden, durch einen Zwischenraum voneinander getrennten Rohren (6,7) aus Edelstahl besteht, welcher evakuiert und mit einer Superisolierung versehen ist, **dadurch gekennzeichnet,**
- **daß** die Oberfläche des vom Kryostat (KR) umschlossenen Schirms (S) des Kabels (KA) und/oder der Kryostat (KR) an seiner inneren Oberfläche rundum mit einer Gleitschicht (10) aus einem abriebfesten Material mit einem gegenüber Stahl geringeren Reibungskoeffizienten versehen ist und
- **daß** eine entsprechende, den Schirm (S) des Kabels (KA) umgebende Gleitschicht (10) für das Kühlmedium durchlässig ist.

2. System nach Anspruch 1, **dadurch gekennzeichnet, daß** die Gleitschicht (10) aus Bronze besteht.

3. System nach Anspruch 1, **dadurch gekennzeichnet, daß** die den Schirm (S) des Kabels (KA) umgebende Gleitschicht (10) aus einem mit Lücke um den Schirm (S) herumgewickelten Band aus Bronze besteht.

4. System nach einem der Ansprüche 1 bis 3, **dadurch gekennzeichnet, daß** zumindest das innere, dem Schirm (S) des Kabels (KA) zugewandte Rohr (7) des Kryostats (KR) quer zu seiner Längsrichtung gewellt ist.

## Claims

1. System having a superconductive cable which consists of a superconductive inner conductor, a screen arranged concentrically therewith and a dielectric applied between the inner conductor and the screen, in which the screen is constructed from a superconductive part and a part consisting of an electrically highly conductive material enclosing the latter, and in which the screen is enclosed with the inclusion of an intermediate space, used for feeding a liquid refrigerant through, by a cryostat which consists of two stainless steel tubes extending concentrically with one another and separated from one another by an intermediate space, which is evacuated and provided with superinsulation, **characterized**
- **in that** the surface of the screen (S) of the cable (KA), which is enclosed by the cryostat (KR), and/or of the cryostat (KR) is provided all around on its inner surface with a liner layer (10) made of an abrasion-resistant material with a lower friction coefficient compared with steel, and
- **in that** a corresponding liner layer (10) enclosing the screen (S) of the cable (KA) is permeable for the refrigerant.

2. System according to Claim 1, **characterized in that** the liner layer (10) consists of bronze.

3. System according to Claim 1, **characterized in that** the liner layer (10) enclosing the screen (S) of the cable (KA) consists of a bronze strip wound around the screen (S) with a gap.

4. System according to one of Claims 1 to 3, **characterized in that** at least the inner tube (7) of the cryostat (KR), facing the screen (S) of the cable (KA), is corrugated transversely to its longitudinal direction.

## Revendications

1. Système doté d'un câble supraconducteur constitué d'un conducteur intérieur supraconducteur (1), d'un blindage (5) disposé concentriquement par rapport à ce conducteur intérieur et d'un diélectrique (3) placé entre le conducteur intérieur et le blindage, le blindage (5) étant formé d'une partie supraconductrice (4) et d'une partie (5) constituée d'un matériau bon conducteur d'électricité et entourant la partie supraconductrice, le blindage étant entouré par un cryostat (KR) qui englobe un espace intermédiaire (8) qui sert au passage d'un fluide liquide de refroidissement, le cryostat étant constitué de deux tubes (6, 7) en acier allié séparés l'un de l'autre par un espace intermédiaire et s'étendant concentriquement l'un par rapport à l'autre et qui est placé sous vide et doté d'une superisolation,
**caractérisé en ce que**
- la surface de l'écran (S) du câble (KA) entouré par le cryostat (KR) et/ou la surface intérieure du cryostat (KR) sont dotés sur la totalité du pourtour d'une couche de glissement (10) en matériau résistant à l'abrasion et dont le coefficient de frottement est plus bas que celui de l'acier et
- **en ce qu'**une couche de glissement (10) appropriée qui entoure l'écran (S) du câble (KA) est perméable au fluide de refroidissement.

2. Système selon la revendication 1, **caractérisé en ce que** la couche de glissement (10) est constituée de bronze.

3. Système selon la revendication 1, **caractérisé en ce que** la couche de glissement (10) qui entoure l'écran (S) du câble (KA) est constituée d'un ruban de bronze enroulé avec des interstices autour de l'écran (S).

4. Système selon l'une des revendications 1 à 3, **caractérisé en ce qu'**au moins le tube intérieur (7), tourné vers l'écran (S) du câble (KA), du cryostat (KR) est ondulé dans la direction transversale à sa longueur.
